# EUROPÄISCHE PATENTSCHRIFT

(11) **EP 2 399 686 B1**
(45) Veröffentlichungstag und Bekanntmachung des Hinweises auf die Patenterteilung: **17.02.2016**
(21) Anmeldenummer: 11171001.8
(22) Anmeldetag: 22.06.2011
(51) Int. Cl.: B21D 1/06, B21D 1/12, B23K 9/167, B23K 9/29

(54) **Verfahren zum Richten von Blechen mit einem elektrischen Lichtbogen**
Method for straichtening sheet metal with an electrical arc welder
Procédé de redressage de tôles avec un arc électrique

(30) Priorität: 25.06.2010 DE 102010025125
(43) Veröffentlichungstag der Anmeldung: 28.12.2011
(73) Patentinhaber: Bombardier Transportation GmbH, 10785 Berlin (DE)
(72) Erfinder: Bartho, Holger, 02625 Bautzen (DE); Rother, Michael, 02763 Oberseifersdorf (DE)
(74) Vertreter: Brunotte, Joachim Wilhelm Eberhard

(56) Entgegenhaltungen:
- AT-B- 215 262
- DE-A1- 19 522 642
- DE-A1- 19 804 577
- DE-A1- 19 937 277
- DE-B- 1 162 315
- JP-A- 6 246 453
- JP-A- 7 032 042
- JP-A- 54 046 165
- JP-A- 59 064 119
- JP-A- 59 070 426
- US-A- 3 769 102

## Beschreibung

Die vorliegende Erfindung betrifft ein Verfahren und eine Vorrichtung zum Richten von Blechen durch einen Wärmeeintrag mit einem elektrischen Lichtbogen und Vorrichtungen, die in einem solchen Verfahren eingesetzt werden können. Die Erfindung betrifft insbesondere den Bau von Schienenfahrzeugen, wobei Bleche gerichtet und z.B. als Außenwandbleche von Wagenkästen verwendet werden.

Metallische Konstruktionen, insbesondere Stahlkonstruktionen, die durch Schweißen und/oder Umformen hergestellt wurden, weisen in der Regel Form- oder Maßabweichungen auf, die durch nachträgliches Richten ausgeglichen werden müssen. Solche Form- und Maßabweichungen, auch bezeichnet als Schweißverzug, treten beispielsweise beim Bau von Wagenkästen für Schienenfahrzeuge auf, bei der Verbindung von Blechen und der Verbindung eines Bleches mit Teilen eines Wagenkastens, wie tragenden Säulen, Aussteifungen, und Rahmen.

Die häufigste Methode zum Richten von metallischen Teilen ist das sogenannte Flammrichten. Beim Flammrichten wird das Bauteil gezielt örtlich erwärmt. Dabei tritt infolge behinderter Wärmedehnung eine bleibende Stauchung ein. Während des Abkühlens ergibt sich eine Kürzung im Werkstück, die zu der gewünschten Formänderung führt (s. auch DIN 8522, Fertigungsverfahren in der Autogentechnik, sowie DVS Merkblatt 1614, "Richten im Schienenfahrzeugbau", Beuth Verlag, Berlin, Deutschland). Das Grundprinzip des Flammrichtens beruht somit auf einer schnellen und örtlich scharf begrenzten Erwärmung in Verbindung mit einer Dehnungsbehinderung, wobei eine Stauchung in der erwärmten Zone auftritt. Beim Abkühlen des Materials kommt es zu Verkürzung bzw. Schrumpfung des Werkstücks.

Nach Bernhard, P., Schreiber, G.: Verfahren der Autogentechnik, Deutscher Verlag für Schweißtechnik GmbH, Düsseldorf, 1973, ist eine wesentliche Voraussetzung für erfolgreiches Flammrichten eine schnelle, begrenzte Wärmeeintragung durch besonders heiße intensive Flammen. Vielfach werden dazu Autogenbrenner mit Acetylen-Sauerstoff-Flammen mit Sauerstoffüberschuss und hoher Flammentemperatur verwendet.

Der Einsatz bekannter Autogenbrenner und die Verwendung herkömmlicher Autogenverfahrenstechniken weisen aber einige Nachteile beim Flammrichten von Metallkonstruktionen, insbesondere von Blechen auf.

Insbesondere bei dünnen Blechen, wie sie beim Bau von Wagenkästen für Schienenfahrzeuge verwendet werden, führt das Flammrichten mittels Autogenbrenner im handgeführten Verfahren jeweils in Abhängigkeit von der Erfahrung des Bedieners(Ausrichters) durch die intensive Acetylen-Sauerstoff-Flamme leicht zum Schmelzen des Metalls an der Stelle des Wärmeeintrags, insbesondere bei längerer Berührung der Werkstoffoberfläche mit dem Flammenkern. Je dünner das Blech, desto schneller kommt es zum Anschmelzen. Es entstehen dadurch neben Verformungen auch unerwünschte Gefügeveränderungen und Oxidationen im direkten Einflussbereich des Wärmeeintrags.

Beim Flammrichten mittels eines Autogenbrenners, bei dem in der Flamme ein Sauerstoffüberschuss vorhanden ist, treten im Falle bereits geringer oberflächlicher Überhitzungen Verbrennungsstellen mit Gruben- und Zunderbildung auf. Diese stellen Schädigungen der Blechstruktur hinsichtlich seiner Festigkeit dar, welche auszuschließen sind. Auf der Oberfläche des Metalls bilden sich durch Oxidation angelaufene Stellen.

Infolge der Bildung von Verformungen und angelaufenen Stellen ist eine Nachbearbeitung erforderlich, da z.B. Bleche auf der Außenseite des Wagenkastens eines Schienenfahrzeuges gleichmäßig eben aussehen müssen und in der Regel lackiert werden sollen.

Zudem ist das Flammrichten mit Autogenbrennern mit einem hohen Lärmpegel und einem hohen Verbrauch an brennbaren Gasen verbunden. Bei Acetylen-Sauerstoff-Gemischen, handelt es sich um hoch explosionsgefährliche Gase, welche in einem weiten Bereich von Mischungsverhältnissen dieses Verhalten zeigen.

DE 11 62 315 B offenbart eine Vorrichtung und ein Verfahren zum Richten von Blechen, wobei ein Lichtbogen erzeugt wird.

Hiervon ausgehend liegt der vorliegenden Erfindung die Aufgabe zugrunde, ein Verfahren anzugeben, durch welches das Richten von Blechen einfacher und effektiver durchzuführen ist. Ferner soll eine Vorrichtung zum Richten von Blechen angegeben werden, mit der ein solches Verfahren durchführbar ist.

Dazu wird ein Verfahren und eine Vorrichtung J zum Richten von Blechen angegeben, bei dem ein Bereich eines Bleches mit einer Erwärmungseinrichtung, die eine Elektrode aufweist, erwärmt wird, gemäß der Ansprüche 1 und 5. Dabei wird durch die Ionisation der Gasstrecke in einer Schutzgasatmosphäre insbesondere durch Anlegen einer Wechselspannung zwischen Blechoberfläche und Elektrode ein elektrischer Lichtbogen erzeugt. Allgemeiner formuliert befindet sich zwischen der Elektrode und dem Blech Gas, das unter Zündung eines Lichtbogens ionisiert wird. Vorzugsweise wird die durch den Lichtbogen bzw. den elektrischen Strom erzeugte Wärme derart erzeugt, dass das Material an der Oberfläche des Blechs (und auch des Rests des Blechs) nicht schmilzt. Bei Vermeidung des Schmelzens werden daraus resultierende Verformungen, Unebenheiten und Rauhigkeitsveränderungen vermieden. Ferner findet ein Energieeintrag ohne Anlaufen der Oberfläche, beispielweise aufgrund von Oxidation, statt, da dies in der Schutzgasatmosphäre verhindert wird. Ferner wird im Vergleich zum Flammrichten mit Autogenbrennern eine Verringerung der Lärmbelastung erzielt und der Einsatz brennbarer Gase vermieden.

Unter einem Blech wird ein flaches Walzprodukt aus Metall verstanden. Das Verfahren eignet sich besonders für Bleche mit einer Stärke von 1 - 10 mm. Die Bleche können in ihrer Struktur eben sein, eine Profilform mit vorgegebenen und erwünschten Erhebungen und/oder Vertiefungen, Abkantungen oder Abwinklungen aufweisen, insbesondere bei Außenwandblechen für Schienenfahrzeuge.

Der Begriff "Richten" bezeichnet nach DVS 1614 einen Prozess, bei dem ein metallischer Gegenstand, zum Beispiel ein Blech, an einer definierten Stelle seiner Oberfläche örtlich erwärmt wird, wobei infolge behinderter Wärmedehnung eine Stauchung der erwärmten Zone eintritt. Die Wärmedehnung ist behindert, da das Metall an der erwärmten Stelle von kaltem Metall an nicht erwärmten Stellen umgeben ist und das kalte Metall in der Umgebung die Ausdehnung des erwärmten Metalls behindert. Die Abkühlung des metallischen Gegenstands nach der Erwärmung und damit verbundenen Stauchung führt dann zu einer Verkürzung bzw. Schrumpfung des metallischen Gegenstands. Dadurch kann eine gewünschte Formänderung erreicht werden.

Die Erwärmungseinrichtung kann auch als "Wärmequelle" oder als "Brenner" bezeichnet werden, wobei vom in der vorliegenden Erfindung verwendeten Brenner statt einer Flamme ein elektrischer Lichtbogen erzeugt wird. Ein Lichtbogen entsteht aufgrund einer Gasentladung zwischen zwei Elektroden, die eine ausreichend hohe elektrische Potentialdifferenz (= Spannung) aufweisen. Im Lichtbogen wird durch Stoßionisation eine hohe örtliche Stromdichte aufrecht erhalten. Durch die Energie des Lichtbogens wird das Blech örtlich erwärmt. Eine der Elektroden bildet das Blech. Die andere wird weiter als Elektrode bezeichnet.

Gemäß der Erfindung wird der Lichtbogen durch Ionisierung vorzugsweise mittels Hochfrequenz in einer Schutzgasatmosphäre zwischen Elektrode und Blechoberfläche erzeugt, und eine Spannung zwischen der Elektrode der Erwärmungsvorrichtung und dem Blech als Gegenelektrode angelegt wird. Zum Anlegen der Spannung können die Elektrode in der Erwärmungseinrichtung und das Blech über übliche Stromleitungen mit einer Spannungsquelle verbunden werden. Die Höhe der Spannung liegt vorzugsweise im Bereich von 45 - 100 V.

Im Lichtbogen findet ein Stromfluss zwischen der Elektrode und einer Oberfläche des Bleches statt. Die Richtung des Stromflusses hängt von der Polung des Bleches und der Elektrode ab. Die Erzeugung des Lichtbogens erfolgt erfindungsgemäß mit einer hochfrequenten Wechselspannung. So findet im Lichtbogen ein Elektronenfluss von der Oberfläche des Bleches zur Elektrode statt. Bevorzugt wird, den Energieeintrag durch den Lichtbogen so zu steuern, dass kein Anschmelzen der Materialoberfläche stattfindet. Bei einer Wechselspannung liegt die Frequenz vorzugsweise im Bereich von 10 Hz bis 10 kHz, zum Beispiel bei 50 Hz oder 60 Hz, wie es bei elektrischen Netzen zur Versorgung von Gebäuden der Fall ist. Unter erfindungsgemäßer Hochfrequenz werden Frequenzen oberhalb von 500 Hz verstanden.

Der Lichtbogen wird vorzugsweise unter Verwendung einer Wolfram-Elektrode erzeugt und mit einer Schutzgasatmosphäre zum Schutz der Elektrode umgeben. Die Verhinderung der Oxidation der Blechoberfläche an der Erwärmungsstelle und dadurch die Vermeidung von Farbveränderungen sind dabei ein willkommener Nebeneffekt, welcher nach Bedarf ausgenutzt werden kann. Der Begriff Schutzgasatmosphäre bedeutet, dass zumindest die nächste Umgebung des Lichtbogens und die Erwärmungsstelle des Gegenstandes mit Schutzgas umgeben sind.

Zur Einstellung einer Schutzgasatmosphäre ist in einer Ausführungsform an der Erwärmungseinrichtung eine Schutzgaszuführung vorgesehen, z.B. in Form einer Düse. Zur Einstellung der Schutzgasatmosphäre kann eine Schutzgaszuführung in Form einer Düse verwendet werden, die die Elektrode ringförmig umgibt. Die Schutzgaszuführung muss aber nicht fest mit der Erwärmungseinrichtung verbunden sein und kann getrennt davon vorliegen, beispielsweise in Form einer Düse.

In einer bevorzugten Ausführungsform weist die Erwärmungseinrichtung eine Ummantelung auf, welche die Elektrode umgibt. Durch die Ummantelung wird zwischen der Elektrode und der Ummantelung ein Hohlraum gebildet. Vorzugsweise ist die Ummantelung ringförmig. Die Ummantelung sitzt beim Betrieb der Erwärmungseinrichtung, d.h. bei Erzeugung eines Lichtbogens, auf der Oberfläche des zu richtenden Bleches auf, d.h. kontaktiert das Blech, vorzugsweise umlaufend um den Bereich, der erwärmt wird. Der Hohlraum bzw. Zwischenraum wird im Betrieb der Vorrichtung mit Schutzgas gefüllt. Dazu führt die Schutzgaszuführung in den Hohlraum. Die Schutzgaszuführung kann beispielsweise eine ringförmige Düse aufweisen, welche die Elektrode umgibt und auf der Innenseite der Ummantelung angeordnet ist. In einer speziellen Variante weist die Ummantelung eine Öffnung auf, damit nach dem Aufsetzen der Erwärmungseinrichtung auf ein Blech in dem Hohlraum vorhandene Luft durch Einströmen des Schutzgases ausgetrieben werden kann. Die Öffnung kann nach dem Austreten der Luft verschlossen werden.

Das Schutzgas wird auch als Inertgas bezeichnet. Geeignete Inertgase sind, ohne Beschränkung, Argon, Helium, Neon und deren Gemische.

Als Elektroden können Elektroden aus Wolfram oder Wolframgemischen wie WT (Wolfram-Thoriumoxid), WL (Wolfram-Lanthanoxid) und WC (Wolfram-Ceroxid) eingesetzt werden. In einer bevorzugten Ausführungsform des Verfahrens ist die Erwärmungseinrichtung wie bekannte Brenner zum Wolfram Inertgas-Schweißen (WIG Schweißen) konstruiert. Im erfindungsgemäßen Verfahren wird ein solcher Brenner allerdings nicht zum Schweißen eingesetzt sondern zur Erwärmung eines Bereiches des Bleches mittels eines Lichtbogens, ohne dass ein Schweißzusatz zugeführt wird und ohne dass das Material in dem Blech geschmolzen wird.

Im erfindungsgemäßen Verfahren wird vorzugsweise, wie bereits erwähnt, das Material in dem Blech nicht geschmolzen. Der Begriff "nicht geschmolzen" bedeutet vorzugsweise, dass kein sichtbares Anschmelzen der Oberfläche des Blechmaterials feststellbar ist. Wenn eine Stelle im Blech zur Schmelze erhitzt wird, entstehen Veränderungen der Oberflächenstruktur, insbesondere in Form von Erhöhungen und/oder Tälern, in der Schmelzzone, die mit der Hand oder den Fingerspitzen fühlbar sind. Solche Erhöhungen und Täler sind nach sachgerechter Anwendung des erfindungsgemäßen Verfahrens auf der Oberfläche des erkalteten Bleches selbst durch Abtasten mit der Hand oder den Fingerspitzen nicht feststellbar.

Das Schmelzen von Material in dem Blech wird vorzugsweise vermieden, indem der Energieeintrag durch den Lichtbogen begrenzt wird. Eine Begrenzung des Energieeintrags kann durch verschiedene Maßnahmen erreicht werden, die nachfolgend aufgezählt sind. Die Maßnahmen können einzeln oder in beliebiger Kombination ergriffen werden.

Eine Maßnahme kann das Anlegen von Wechselstrom sein. Durch die sich ständig ändernde Richtung des dadurch initiierten Elektronenflusses kommt es zu einer geringeren Erwärmung der Blechoberfläche.

Eine zweite Maßnahme ist die Wahl der angelegten Spannung. Vorzugsweise wird eine Spannung im Bereich von 45 bis 100 V angelegt.

Noch eine weitere Maßnahme ist die Einstellung eines geeigneten Abstands von der Elektrodenspitze zur Oberfläche des Bleches. Ein bevorzugter Abstand beträgt 5 bis 15 mm, am meisten bevorzugt etwa 9 bis 11 mm. Vorzugsweise wird zudem der Abstand von der Elektrodenspitze zur Oberfläche des Bleches während der Verfahrensdauer konstant gehalten.

Schließlich kann der Energieeintrag auch durch die Einwirkungsdauer des Lichtbogens gesteuert werden. Vorzugsweise wird der Lichtbogen über eine Zeitdauer von maximal 1 bis 5 Sekunden erzeugt. Durch eine kurze Einwirkzeit wird die Schmelztemperatur des Metalls an der Oberfläche des metallischen Bauteils nicht erreicht und es findet kein Aufschmelzen des Metalls an der Oberfläche statt.

Eine beliebige Kombination von zwei oder mehr der vorangegangenen Maßnahmen ist möglich. Vorzugsweise wird das Schmelzen von Material in dem Blech vermieden, indem der Energieeintrag durch den Lichtbogen durch Anlegen einer Spannung im Bereich von 45 bis 100 V und/oder die Einstellung eines des Abstands von der Elektrodenspitze zur Oberfläche des Bleches im Bereich von 9 bis 11 und/oder die Wahl der Elektrodenart (WT, WL, WC oder reines Wolfram) als Pluspol und des Blechs als Minuspol und/oder umgekehrt und/oder der Einsatz von Wechselstrom mit dem Wechsel der Dauer der Wechselstromamplituden und/oder die Erzeugung des Lichtbogens über eine Zeitdauer von maximal 1 bis 5 Sekunden gesteuert wird. Die Blechstärke beträgt dabei vorzugsweise 1 - 10 mm.

Nach der Erwärmung durch Einwirkung des Lichtbogens wird das Bauteil vorzugsweise abgekühlt oder abkühlen gelassen und man kann das Richtergebnis begutachten. Das Abkühlen kann durch Stehenlassen an der Luft, in einem Luftstrom, oder durch Besprühen mit Wasser oder Eintauchen in ein Wasserbad erfolgen, wobei eine Abkühlung durch Stehenlassen an der Luft oder mit einem Luftstrom bevorzugt ist. Zur Vermeidung von Anlauffarben an der Rückseite des Bleches, kann diese mit Schutzgas bis zur Abkühlung unter eine Temperatur von ca. 600 °C beaufschlagt werden.

In einer speziellen Ausführungsform wird das Verfahren mit einer Anordnung durchgeführt, die eine Mehrzahl voneinander beabstandeter Erwärmungseinrichtungen aufweist, wobei jede Erwärmungseinrichtung eine Elektrode und einen Stromanschluss an der Elektrode aufweist, und wobei von der Mehrzahl Erwärmungseinrichtungen jeweils eine zur Erzeugung eines Lichtbogens angesteuert wird. Vorzugsweise werden Lichtbögen in zeitlicher Abfolge an einer Erwärmungseinrichtung erzeugt.

Bei der zeitlichen Abfolge wird insbesondere zumindest ein Lichtbogen über einen vorzugsweise fest vorgegebenen Zeitraum aufrechterhalten und danach ein weiterer Lichtbogen durch eine andere Erwärmungseinrichtung erzeugt.

In dieser Ausführungsform werden in einem ersten Erwärmungsschritt ein Lichtbogen zwischen einer oder mehreren, d.h. verschiedenen, Elektroden und der Oberfläche des Bleches als Gegenelektrode erzeugt, wobei die Lichtbögen gleichzeitig oder in zeitlicher Abfolge erzeugt werden können. Vorzugsweise erfolgt nach dem ersten Erwärmungsschritt eine Abkühlung des Bleches zur Begutachtung des Richtergebnisses. Auf Basis des Richtergebnisses wird entschieden, an welcher Stelle des Bleches mit dem Richten fortgefahren werden soll. Im zeitlich darauf folgenden nächsten Erwärmungsschritt können z.B. an der gleichen Stelle wie vorher bzw. an den gleichen Stellen mit jeweils der gleichen Erwärmungseinrichtung wie im vorigen Erwärmungsschritt erneut ein Lichtbogen bzw. mehrere Lichtbögen erzeugt werden. Mehrere Lichtbögen können in vorgegebener zeitlicher Abfolge erzeugt werden. Ebenso kann man auch eine andere Stelle zur Erwärmung wählen und dementsprechend mit Erwärmungseinrichtungen an anderer Stelle Lichtbögen erzeugen. Der zumindest eine weitere Erwärmungsschritt kann, wie der erste Erwärmungsschritt, eine zeitliche Abfolge von Lichtbögen aufweisen. Danach erfolgt vorzugsweise eine erneute Abkühlung des Bleches zur Begutachtung des Richtergebnisses und eine Entscheidung über weitere Erwärmungsschritte, sofern erforderlich. In dieser Ausführungsform des Verfahrens können prinzipiell die Erwärmungsstellen des Bleches zum Richten nach einem frei wählbaren Muster und in einer beliebigen Abfolge gewählt werden.

Die Begutachtung (auch Auswertung genannt) des Richtergebnisses kann automatisch erfolgen, z.B. unter Verwendung einer Kamera mit angeschlossener Bildverarbeitung, oder manuell, beispielsweise mit einem sogenannten Richtscheit als Messinstrument erfolgen. Ein Richtscheit ist z.B. ein Lineal aus Aluminium. Ein wesentlicher Vorteil der Mehrzahl Erwärmungseinrichtungen besteht darin, dass Lichtbögen an definiert vorgegebenen Stellen gleichzeitig und vorzugsweise nacheinander erzeugbar sind. Damit sind Wärmeeinträge an verschiedenen Stellen in beliebiger zeitlicher Abfolge in sehr kurzer Zeit möglich. Ein erneutes Umpositionieren der Erwärmungseinrichtungen innerhalb ihres Arbeitsbereiches ist nicht erforderlich.

In einer speziellen Ausführungsform ist für die Mehrzahl Erwärmungseinrichtungen eine gemeinsame Schutzgaszuführung vorgesehen. Mit einer gemeinsamen Schutzgaszuführung wird der konstruktive Aufwand verringert. Es muss jedoch sichergestellt sein, das jede Elektrode, die zum Einsatz kommt, durch ausreichend Schutzgas vor der Atmosphäre geschützt ist. Dies kann dadurch erreicht werden, dass der Zwischenraum, der beim Aufsetzen der Mehrzahl von Erwärmungseinrichtungen auf ein Blech zwischen den Elektroden und dem Blech gebildet wird mit ausreichend Schutzgas befüllt wird, so dass alle Elektroden gleichzeitig mit Schutzgas umgeben werden. Bei einer anderen Ausführungsform weist jede Elektrode eine zugeordnete Schutzgaszuführung auf. In diesem Fall kann permanent während des Bestehens des Lichtbogens Schutzgas zugeführt werden, das vorzugsweise einen mantelförmigen Bereich um den Lichtbogen durchströmt, in dessen Inneren sich der Lichtbogen erstreckt.

Alternativ kann der Hohlraum, in den Schutzgas eingeleitet wird, lediglich den Lichtbogen in dem Erwärmungsbereich umgeben, der momentan erzeugt wird. Die entsprechende Ummantelung ist daher vorzugsweise verfahrbar und/oder verschiebbar, wobei eine Positionierungseinrichtung z.B. so gestaltet ist, dass Bereiche um potenzielle Erwärmungszonen des Blechs reproduzierbar ummantelt und mit Schutzgas versehen werden können.

Neben dem beschriebenen Verfahren betrifft die Erfindung eine Vorrichtung zum Richten von Blechen gemäß dem Anspruch 5.

Zur Beschreibung der Vorrichtung wird ergänzend auf die Beschreibung des erfindungsgemäßen Verfahrens verwiesen, bei dem u.a. bereits die Elektrode, spezielle Ausführungsformen der Erwärmungseinrichtung und die Schutzgaszuführung erläutert wurden.

Der Abstandshalter zur Einstellung eines vorgegebenen Abstandes zwischen der Elektrode und der Oberfläche des Bleches kann z.B. aus mehreren Füßen bestehen, die mit der Erwärmungseinrichtung verbunden sind, und die bei der Durchführung des Richtverfahrens auf die Oberfläche des Bleches aufgesetzt werden.

In einer anderen Variante kann der Abstandhalter auch aus einer Ummantelung bestehen, wie bereits zuvor beschrieben, der die Elektrode umgibt und einen Hohlraum umrandet. Die Ummantelung ist bevorzugt ringförmig und noch mehr bevorzugt rotationssymmetrisch. Bei einem ringförmigen Abstandhalter ist vorzugsweise in der ringförmigen Ummantelung eine Öffnung vorhanden, damit Schutzgas, das den Raum um die Elektrode umgibt, austreten kann. In dieser Variante kann der Eintritt von Sauerstoff in den Einwirkungsbereich des Lichtbogens und damit die Oxidation der Blechoberfläche besonders wirkungsvoll vermieden werden, da das Schutzgas permanent nachgeführt wird und durch den entstehenden Überdruck an der Öffnung in der ringförmigen Ummantelung, austritt. Gleichzeitig sorgt der Abstandhalterring für eine Begrenzung gegen einen Sauerstoffeintritt von außen. In dieser Ausführungsform dient die ringförmige Ummantelung gleichzeitig als Abstandhalter und als Ummantelung für den mit Schutzgas gefüllten bzw. durchströmten Bereich.

Der Abstandhalter besteht vorzugsweise aus einem temperaturbeständigen Material, das gegen die im Verfahren erzeugten Temperaturen beständig ist wie z.B. temperaturbeständiger Kunststoff, Keramik oder Porzellan. Insbesondere bei hochfrequenter Wechselspannung zum Betreiben des Lichtbogens muss das Material ein Isolator sein, damit die verwendete Hochfrequenz nicht in dem Material induziert wird.

Zum Anlegen der Spannung kann die Elektrode in der Erwärmungseinrichtung über einen üblichen Stromanschluss mit einer Spannungsquelle verbunden werden. An der Elektrode kann beispielsweise eine Stromleitung angeschlossen sein oder die Elektrode kann mit einer Steckverbindung zum Anschluss an eine Stromleitung versehen sein. In einer anderen Variante kann eine Stromleitung auch fest mit der Elektrode verbunden sein.

Die Vorrichtung kann eine Steuerung aufweisen, die ausgestaltet ist, die Erwärmungseinrichtung so anzusteuern, dass der Lichtbogen das Material an der Oberfläche nicht schmilzt.

In noch einer bevorzugten Ausführungsform betrifft die Erfindung eine Vorrichtung zum Richten von Blechen, aufweisend:
- eine Mehrzahl voneinander beabstandeter Erwärmungseinrichtungen, wobei jede Erwärmungseinrichtung eine Elektrode zur Erzeugung eines Lichtbogens mit einem Stromfluss zwischen der Elektrode und einer Oberfläche eines Bleches aufweist, und wobei bei der Vorrichtung zum Richten des Bleches jede der Mehrzahl Erwärmungseinrichtungen einzeln zur Erzeugung eines Lichtbogens ansteuerbar ist, so dass Lichtbögen an beliebigen Elektroden in zeitlicher Abfolge erzeugt werden können,
- eine oder mehrere Schutzgaszuführungen.

Im Unterschied zu der zuvor beschriebenen Vorrichtung weist diese Vorrichtung eine Mehrzahl voneinander beabstandeter Erwärmungseinrichtungen auf. Sie weist insbesondere die folgenden Vorteile auf:
Die Erwärmungseinrichtungen sind definiert voneinander beabstandet und in vorgegebener Weise relativ zueinander positioniert. Dadurch können auf der Oberfläche eines Bleches die erwünschten Stellen zur Erwärmung genauer und bei reproduzierbaren Abständen angesteuert werden, als es bei einer Führung einer Erwärmungseinrichtung von Hand, wie z.B. bei einem Autogenbrenner, der Fall ist. Dadurch werden subjektive Einflüsse und Ungenauigkeiten, die bei der Führung eines Brenners oder einer anderen Erwärmungseinrichtung von Hand auftreten, vermieden. Insbesondere kann eine Stelle wiederholt erwärmt werden, wobei zwischenzeitlich in der Regel zumindest eine andere Stelle erwärmt wird.

Mit der oben genannten Vorrichtung kann auch die Arbeitszeit zum Richten im Vergleich zu einer von Hand geführten Erwärmungseinrichtung reduziert werden, da Lichtbögen an verschiedenen Elektroden in schneller zeitlicher Abfolge erzeugt werden können und Elektroden nicht neu positioniert werden müssen.

Zur Beschreibung der Vorrichtung wird ergänzend auf die Beschreibungen der zuvor beschrieben Vorrichtung und des Verfahrens verwiesen, bei dem u.a. bereits die Elektrode, spezielle Ausführungsformen der Erwärmungseinrichtung, die Schutzgaszuführung und eine Steuerung aufweisen, die ausgestaltet ist, die Erwärmungseinrichtung so anzusteuern, dass der Lichtbogen das Material an der Oberfläche nicht schmilzt, erläutert wurden.

Die Erwärmungseinrichtungen können auf verschiedenste Art und Weise angeordnet sein. Beispielhafte Anordnungen sind die Anordnung in Form eines zweidimensionalen regelmäßigen Rasters oder Gitters, an deren Eckpunkten die Elektroden der Erwärmungseinrichtungen angeordnet sind, oder eine konzentrische Anordnung, d.h. eine symmetrische Anordnung um einen gemeinsamen Mittelpunkt.

Die Erwärmungseinrichtungen können relativ zueinander fest fixiert sein, und beispielsweise an einem gemeinsamen Träger befestigt sein. Der Träger kann beispielsweise die Form einer Platte oder eines Gitters aufweisen. Das Material des Trägers ist nicht besonders beschränkt. So kann der Träger beispielsweise aus Metall (in diesem Fall ist der Träger vorzugsweise elektrisch gegen in Induzieren der Hochspannung abgeschirmt), insbesondere temperaturbeständigem Kunststoff, Holz oder Keramik gefertigt sein. Der Träger besteht vorzugsweise aus einem temperaturbeständigen Material, das gegen die im Verfahren erzeugten Temperaturen beständig ist.

In einer anderen Ausführungsform sind die Erwärmungseinrichtungen relativ zueinander örtlich variabel positionierbar. Dadurch können beliebige Anordnungsmuster der Erwärmungseinrichtungen vorgegeben und der Abstand der einzelnen Erwärmungseinrichtungen zueinander eingestellt werden. Hierzu können die Erwärmungseinrichtungen an einem Träger befestigt sein, der eine variable örtliche Positionierung ermöglicht. In einer Variante kann der Träger mit Schienen versehen sein, entlang denen die Erwärmungseinrichtungen örtlich verschiebbar angeordnet sind. In einer anderen Variante kann der Träger eine Mehrzahl Positionen zur Befestigung von Erwärmungseinrichtungen aufweisen, wobei Erwärmungseinrichtungen von Position zu Position örtlich versetzt werden können. Die Positionen zur Befestigung von Erwärmungseinrichtungen können beispielsweise Steckplätze für Erwärmungseinrichtungen oder Löcher mit einem Innengewinde sein, in die Erwärmungseinrichtungen mit einem passenden Gegengewinde eingeschraubt werden können.

Die Erwärmungseinrichtungen sind vorzugsweise einzeln zur Erzeugung eines Lichtbogens ansteuerbar. Dazu ist vorzugsweise jede Erwärmungseinrichtung mit einem Stromanschluss versehen. An der Elektrode kann beispielsweise eine Stromleitung angeschlossen sein oder die Elektrode kann mit einer Steckverbindung zum Anschluss an eine Stromleitung versehen sein. In einer anderen Variante kann eine Stromleitung auch fest mit der Elektrode verbunden sein.

Über den Stromanschluss kann jede Erwärmungseinrichtung mit einer Spannungsquelle verbunden sein. In einer bevorzugten Variante der Erfindung ist die Spannungsquelle mit einer Mehrzahl Erwärmungseinrichtungen verbunden und enthält eine Steuerung, die steuert, wann (zeitliche Abfolge) und an welcher der Erwärmungseinrichtungen bzw. an welche Elektrode eine Spannung zur Erzeugung eines Lichtbogens angelegt wird. So können Lichtbögen in zeitlicher Abfolge an beliebigen Elektroden erzeugt werden.

Bei der Vorrichtung mit einer Mehrzahl voneinander beabstandeter Erwärmungseinrichtungen können Abstandhalter zur Einstellung eines vorgegebenen Abstands zwischen den Elektroden und der Oberfläche des Bleches vorhanden sein. Hierzu wird auf die obigen Ausführungen zu Abstandhaltern verwiesen. Außerdem sind noch andere Varianten denkbar: Der oder die Abstandhalter können beispielsweise an den Elektroden selbst oder zusammen mit den Erwärmungseinrichtungen an einem Träger befestigt sein.

Der oder die Abstandhalter können verschiedenste Formen aufweisen, wie z.B. Füße, Leisten oder Rahmen. Das Material des Abstandhalters ist nicht besonders beschränkt. So kann der Abstandhalter beispielsweise aus (insbesondere temperaturbeständigem) Kunststoff, Holz oder Keramik gefertigt sein. Der Abstandhalter besteht vorzugsweise aus einem temperaturbeständigen Material, das gegen die im Verfahren erzeugten Temperaturen beständig ist.

In einer bevorzugten Ausführungsform ist der Abstandhalter in seiner Länge variabel einstellbar, so dass der Abstand zwischen den Elektroden und der Oberfläche des Bleches variiert werden kann. Der Abstandhalter kann beispielsweise so ausgestaltet sein, dass seine Länge voreinstellbar ist, bevor die Vorrichtung auf ein Blech aufgesetzt wird. Zur Voreinstellung kann der Abstandhalter aus zwei Elementen bestehen, die ineinander verschiebbar sind oder die über ein Gewinde miteinander verbunden sind, wobei die Länge des Abstandhalters einstellbar ist, indem man die beiden Elemente relativ zueinander verdreht oder verschiebt. Der Abstandhalter kann auch aus einem Element bestehen, das verdrehbar oder verschiebbar an der Vorrichtung, beispielsweise an der Erwärmungseinrichtung selbst oder dem Träger, befestigt ist. In dieser Ausführungsform wird der Abstand zwischen den Elektroden und der Oberfläche des Bleches variiert indem man den Abstandhalter in seiner Position verdreht oder verschiebt.

Bei einer bevorzugten Ausführungsform ist ebenfalls eine Mehrzahl der Elektroden vorgesehen, die an einem gemeinsamen Träger befestigt sind. Dabei kann die Position der einzelnen Elektroden unabhängig von der Position der anderen Elektroden eingestellt werden. Z.B. kann die Einstellung der Position durch die oben beschriebene verdrehbare oder verschiebbare Mechanik einstellbar sein. Auf diese Weise ist die Position der einzelnen Elektroden in einer Richtung einstellbar, die auf die Blechoberfläche weist, z.B. in einer Richtung, die etwa senkrecht zur Blechoberfläche verläuft. Insbesondere kann diese Einrichtung wie oben beschrieben dazu dienen, den Abstand der einzelnen Elektroden von der Blechoberfläche einzustellen. Die Vorrichtung mit dem gemeinsamen Träger hat hier jedoch die zusätzliche Aufgabe, den Abstand der einzelnen Elektroden von der Blechoberfläche während des Betriebes der Elektrode und/oder nach einem Betrieb der Elektrode und vor einem erneuten Betrieb der Elektrode einzustellen, um ein Abbrennen des Elektrodenmaterials auszugleichen. Dem liegt die Erfahrung zugrunde, dass das Material der Elektroden während des Betriebes, d.h. während der Lichtbogen brennt, an der Spitze der Elektroden abbrennt, d.h. Material verloren geht. Diese Vorrichtung wird im Folgenden als Brennerhalter bezeichnet.

In einer weiteren Ausführungsform weist der Abstandshalter oder Brennerhalter zur Einstellung der Länge eine elastisch verformbare Einrichtung, wie beispielsweise eine Feder auf, die sich mit Erhöhung des Anpressdrucks der Vorrichtung auf das Blech verkürzt. Diese Ausführungsform ist besonders vorteilhaft, wenn das zu richtende Blech Unebenheiten oder Krümmungen aufweist. Wenn bei einem solchen Blech bei jeder Erwärmungsstelle der Abstand von Elektrode zur Blechoberfläche gleich sein soll, so kann dies durch verformbare Abstandhalter erreicht werden.

In einer weiteren Ausführungsform weist die Vorrichtung ein oder mehrere Abschlusselemente auf, die beim Aufsetzen der Vorrichtung auf ein Blech den zwischen den Elektroden und dem Blech gebildeten Zwischenraum derart abdichten, dass ein Austreten von Schutzgas aus dem Zwischenraum behindert oder verhindert wird. Allerdings ist zumindest eine Öffnung vorgesehen, die verschließbar ist, damit bei offener Öffnung Luft aus dem Zwischenraum entweichen kann, bis der Zwischenraum mit Schutzgas gefüllt ist. In dieser Ausführungsform ist ein Träger, an dem die Erwärmungseinrichtungen befestigt sind, so ausgestaltet, dass er undurchlässig für Schutzgas ist. In Frage kommen hierfür beispielsweise Träger in Form einer Platte, die verschließbare Öffnungen aufweist. Die Abschlusselemente können alternativ auch als Abdichtelemente bezeichnet werden, wobei die Abdichtung gegen ein Austreten von Schutzgas vollständig sein kann, aber nicht vollständig sein muss.

Das Material des Abschlusselements ist nicht besonders beschränkt. So kann das Abschlusselement beispielsweise aus Metall, (insbesondere temperaturbeständigem) Kunststoff, Holz oder Keramik gefertigt sein. Das Abschlusselement besteht vorzugsweise aus einem temperaturbeständigen Material, das gegen die im Verfahren erzeugten Temperaturen beständig ist.

Das Abschlusselement kann beispielsweise die Form eines Rahmens haben, der alle Erwärmungseinrichtungen/Elektroden umgibt und auf der Oberfläche eines Bleches aufsitzt, wenn die Vorrichtung über der Oberfläche positioniert wird. Beim Aufsitzen des Rahmens wird der Zwischenraum zwischen den Elektroden und dem Blech nach außen abgeschlossen. Dieser abgeschlossene Raum kann mit Schutzgas gefüllt werden, wozu ein Anschluss zur Schutzgaszuführung vorgesehen ist. Das Schutzgas dient dem bereits zuvor erwähnten Zweck der Vermeidung von Oxidation. Der erwähnte Rahmen kann auch gleichzeitig als Abstandhalter dienen. Der Abschluss nach außen muss nicht absolut dicht sein. Ein weitgehender aber nicht vollständiger, d.h. nicht vollständig dichter, Abschluss des Zwischenraums nach außen kann ausreichen. In dieser Variante wird vorzugsweise ein Überdruck von Schutzgas im Zwischenraum erzeugt, so dass das Schutzgas durch die nicht abgedichteten Stellen ausströmen kann und das Eindringen von Sauerstoff verhindert wird.

Die Schutzgaszuführung ist vorzugsweise bei jeder Elektrode unmittelbar neben dem Brenner angeordnet, um die Elektrode vor Sauerstoff zu schützen.

Ein Gegenstand der Erfindung ist auch eine Anordnung, aufweisend eine Vorrichtung wie zuvor beschrieben und ein Blech, wobei die Elektrode(n) der Vorrichtung in Richtung einer Oberfläche des Bleches orientiert ist/sind, um einen Lichtbogen mit einem Stromfluss zwischen der/den Elektrode(n) und der Oberfläche des Bleches zu erzeugen. Diese Anordnung wird insbesondere bei Anwendung des zuvor beschriebenen Verfahrens realisiert.

Schließlich betrifft die Erfindung auch die Verwendung einer Anordnung wie zuvor beschrieben zum Richten von Blechen, insbesondere von Blechen für Wagenkästen von Schienenfahrzeugen. Das Richten der Bleche kann nach dem zuvor beschriebenen Verfahren erfolgen.

Ausführungsbeispiele in der Erfindung werden nun unter Bezugnahme auf die beigefügten Zeichnungen beschrieben. Die Figuren der Zeichnung zeigen:
- Fig. 1: eine einzelne Erwärmungsvorrichtung, die auf die Oberfläche eines Bleches aufgesetzt ist, im Querschnitt,
- Fig. 2: eine schematische Darstellung einer Vorrichtung zum Richten von Blechen mit einer Mehrzahl voneinander beabstandeter Erwärmungseinrichtungen in der Draufsicht, und
- Fig. 3: eine Vorrichtung zum Richten von Blechen im Querschnitt, mit einer Mehrzahl voneinander beabstandeter Erwärmungseinrichtungen und mit Abschlusselementen, wobei die Vorrichtung auf ein Blech aufgesetzt ist.

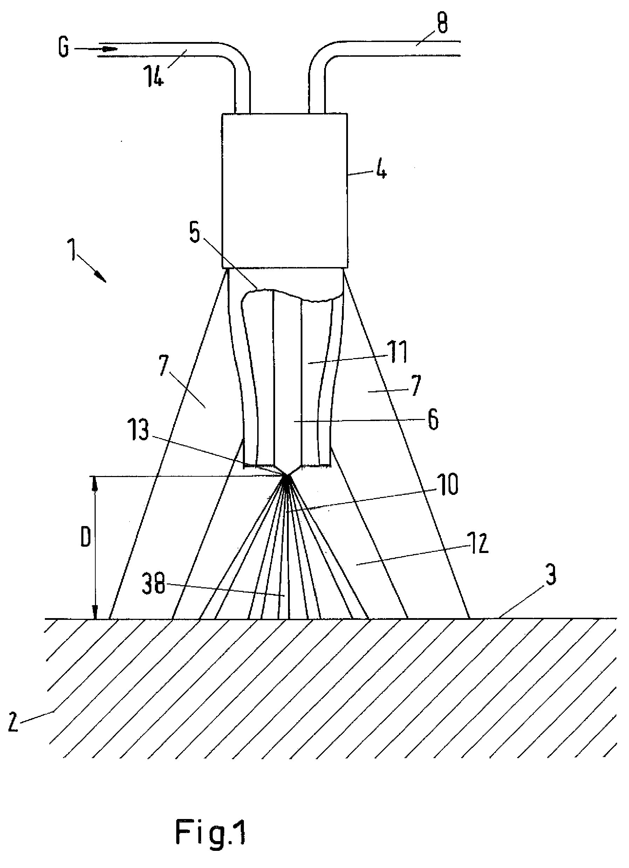

Fig. 1 zeigt den prinzipiellen Aufbau einer Erwärmungsvorrichtung 1 im Querschnitt. Die Erwärmungsvorrichtung ist auf die Oberfläche 3 eines Bleches 2 aufgesetzt. Die Erwärmungsvorrichtung 1 weist einen Brennerkopf 4, eine Schutzgaszuführung 5, hier in Form einer Düse, eine Elektrode 6, Abstandshalter 7, hier in Form von Stäben, und einen Stromanschluss 8 auf. An der Erwärmungseinrichtung ist eine Zuleitung 14 für das Schutzgas G vorgesehen, durch welche das Gas zur Düse 5 geleitet wird. Zwischen der Elektrode 6 und der Oberfläche des Bleches 3 wird ein Lichtbogen 38 gebildet, der in seiner ungefähren Form schematisch dargestellt ist. Durch die stabförmigen Abstandhalter 7, deren Abstand von der Elektrode in Richtung der Oberfläche des Bleches zunimmt, wird ein Abstand D zwischen der Elektrode bzw. der Elektrodenspitze 13 und der Oberfläche des Bleches 3 festgelegt. Die Gasdüse 5 ist teilweise aufgeschnitten dargestellt, so dass man die Elektrode 6 erkennt. Die Gasdüse 5 umgibt die Elektrode 6 ringförmig. Aus der Düse strömt Schutzgas 11 aus und bildet eine Schutzgashülle 12. Im Einwirkungsbereich des Lichtbogens wird das Blech erwärmt.

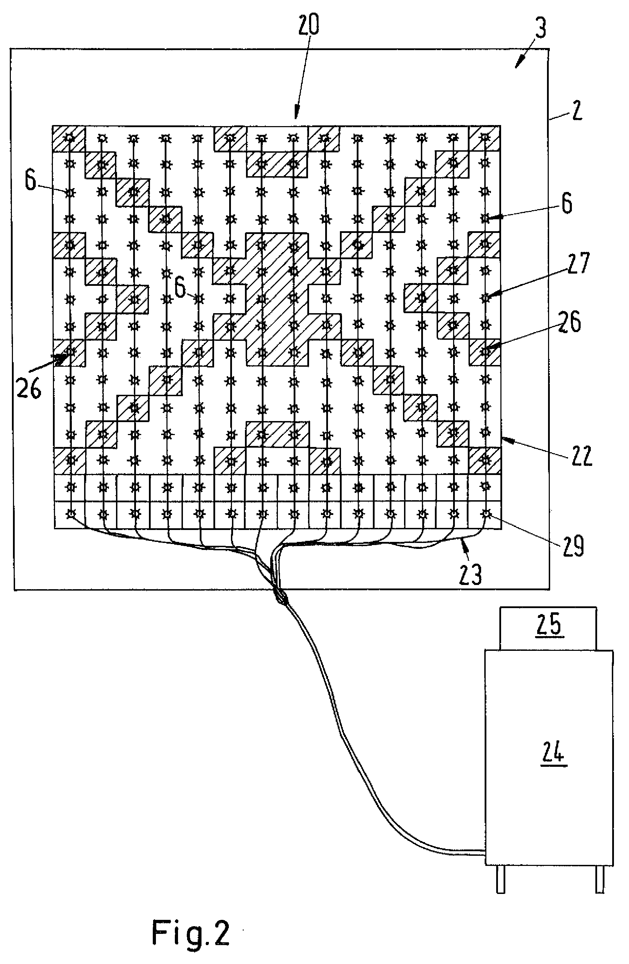

Fig. 2 zeigt eine Vorrichtung zum Richten von Blechen 20 mit einer Mehrzahl voneinander beabstandeter Erwärmungseinrichtungen mit Elektroden 6 in einer Draufsicht, wobei von den durch kleine Kreise dargestellten Elektroden wenige mit dem Bezugszeichen 6 bezeichnet sind. Die Elektroden können beispielsweise so ausgestaltet sein wie in der Fig. 1 gezeigt und sind daher hier mit dem gleichen Bezugszeichen bezeichnet. Andere Gestaltungen/Geometrien sind aber ebenfalls möglich. Die Vorrichtung ist auf die Oberfläche 3 eines Bleches 2 aufgesetzt. Der Einfachheit halber sind von den Erwärmungseinrichtungen nur die Elektroden 6 schematisch gezeigt. Die Erwärmungseinrichtungen mit den Elektroden 6 sind an einem Träger 22, hier in Form einer Trägerplatte, befestigt und über einen Stromanschluss 23, hier in Form einer Stromleitung, mit einer Spannungsquelle 24 verbunden, die eine Steuerung 25 aufweist. Jede Elektrode 6 ist mit einer eigenen Stromleitung verbunden (nicht gezeigt) und über diese ansteuerbar.

Gezeigt wird in Fig. 2 die Vorgabe eines Musters von Elektroden 6, die zum Richten eines Bleches angesteuert und mit Spannung beaufschlagt werden, um einen Lichtbogen zwischen der Elektrode und der Oberfläche 3 des Bleches 2 zu erzeugen.

Die in den schraffierten Rechtecken gezeichneten Elektroden 26 werden zur Erzeugung von Lichtbögen angesteuert und sind in diesem Fall aktive Elektroden. Die nicht in schraffierten Rechtecken gezeichneten Elektroden 27, die aber oberhalb der beiden unten in Fig. 2 gezeichneten Reihen von Elektroden 29 dargestellt sind, sind inaktive Elektroden, an denen momentan keine Lichtbögen erzeugt werden. Die in den unteren beiden Reihen dargestellten Elektroden 29 liegen außerhalb des gewählten Arbeitsbereiches zum Richten. Die Anordnung des Arbeitsbereiches, sowie der aktiven und inaktiven Elektroden ist von Fall zu Fall frei wählbar.

Ebenso kann die Anzahl und Anordnung der aktiven Elektroden innerhalb eines gewählten Arbeitsbereiches frei gewählt werden, weil jede der Mehrzahl Erwärmungseinrichtungen einzeln zur Erzeugung eines Lichtbogens ansteuerbar ist. In dem vorliegenden Beispiel besteht im Zentrum des Arbeitsbereiches ein erhöhter Richtbedarf und die aktiven Elektroden 26 sind nach einem entsprechenden Muster ausgewählt worden. An den aktiven Elektroden werden Lichtbögen in zeitlicher Abfolge erzeugt. Durch die Steuerung 25 wird vorgegeben, wann und an welcher Elektrode ein Lichtbogen zur Blechoberfläche erzeugt wird.

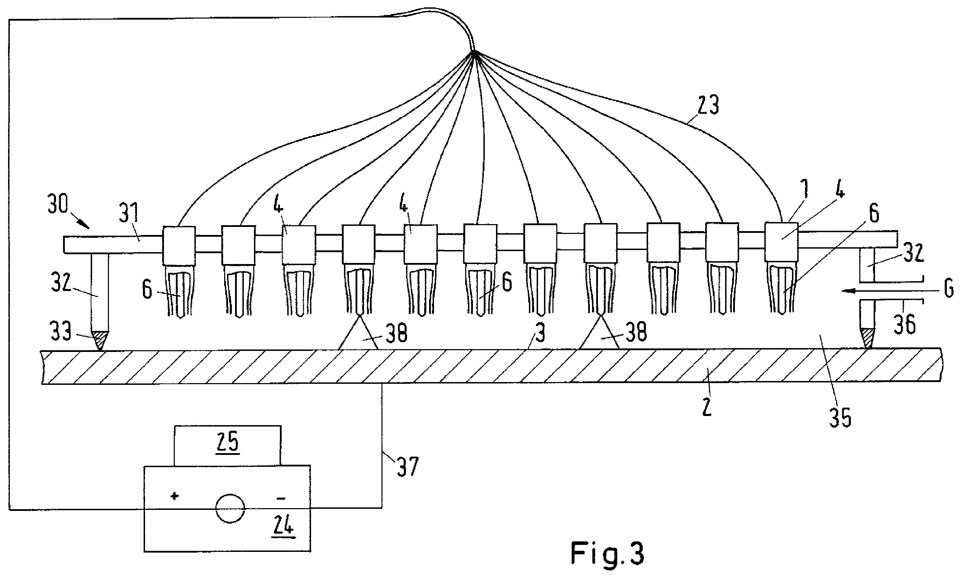

Fig. 3 zeigt in einer Querschnittsansicht eine Vorrichtung zum Richten von Blechen 30 mit einer Mehrzahl voneinander beabstandeter Erwärmungseinrichtungen 1. Die Erwärmungseinrichtungen 1 sind an einem Träger 31 befestigt. In diesem Ausführungsbeispiel sind die Brennerköpfe 4 in den Träger 31 eingelassen. Neben den gezeigten Erwärmungseinrichtungen können weitere Erwärmungseinrichtungen im Raum hinter oder vor der gewählten Querschnittsfläche vorhanden sein. Beispielsweise können die Erwärmungseinrichtungen an einem gemeinsamen Träger in der Art eines Rasters angeordnet sein, wie in der Fig. 2 in der Draufsicht gezeigt. Die Erwärmungseinrichtungen sind von einem Abstandhalter 32 umgeben, wobei in Fig. 3 nur der Querschnitt zu sehen ist, und die Längsseiten, die vor und hinter den Erwärmungseinrichtungen parallel zur Zeichnungsebene verlaufen, nicht gezeigt sind. An der Unterkante des Abstandhalters 32 ist eine durchgehende, wärmestabile Gummilippe 33 angebracht, die auf der Oberfläche 3 des Bleches 2 aufsitzt. Der Abstandhalter 32 mit der Gummilippe 33 schließt den zwischen den Elektroden 6 und dem Blech gebildeten Zwischenraum 35 nach außen hin ab. Die anderen Begrenzungselemente des Raumes sind die Erwärmungseinrichtungen 1 und der Träger 31 auf der einen, und das Blech 2 auf der anderen Seite des Raumes. In der gezeigten Ausführungsform dient der Abstandhalter 32 auch gleichzeitig als Abschlusselement bzw. Abdichtungselement. An einer Stelle des Abschlusselements ist eine gemeinsame Zuführung 36 für Schutzgas G vorgesehen, durch welche Schutzgas G in Pfeilrichtung einströmen und den Zwischenraum 35 füllen kann. Die gezeigte Ausführungsform weist nur eine Zuführung 36 für Schutzgas auf. Ebenso kann aber auch mehr als eine Zuführung 36 vorgesehen sein. Statt am Abschlusselement kann die Zuführung 36 für Schutzgas auch im Träger 31 oder an anderem Ort, mit Zugang zum Zwischenraum 35, vorgesehen sein. Das Schutzgas kann insbesondere durch ein angeschlossenes Rohr oder einen flexiblen Schlauch zugeführt werden. Weiterhin kann auch ein Anschluss für eine Vakuumpumpe (nicht gezeigt) im Abschlusselement 32 oder im Träger 31 vorhanden sein, so dass der Zwischenraum 35 evakuiert werden kann. Die Erwärmungseinrichtungen sind mit Stromanschlüssen 23, hier in Form von Stromleitungen, versehen. Über die Stromleitungen 23 sind die Erwärmungseinrichtungen mit einer Spannungsquelle 24 verbunden. Eine weitere Leitung 37 führt von der Spannungsquelle zum Blech. In der gezeigten Ausführungsform ist eine Gleichspannung angelegt, wobei der Minuspol am Blech 2 und der Pluspol an den Elektroden 6 liegt. Über die Steuerung 25 können die Elektroden einzeln mit Spannung beaufschlagt werden und so kann gesteuert werden, an welcher Elektrode bzw. an welcher Stelle des Bleches ein Lichtbogen 38 erzeugt wird.

## Patentansprüche

1. Verfahren zum Richten von Blechen, bei dem ein Bereich eines Bleches (2) mit einer Erwärmungseinrichtung (1), die eine Elektrode (6) aufweist, erwärmt wird, wobei an der Erwärmungseinrichtung (1) in einer Schutzgasatmosphäre (12) ein Lichtbogen (38) mit einem Stromfluss zwischen der Elektrode (6) und einer Oberfläche (3) des Bleches (2) erzeugt wird, ohne dabei das Material an der Oberfläche des Bleches zu schmelzen, **dadurch gekennzeichnet, dass**
der Lichtbogen (38) durch Anlegen einer hochfrequenten Wechselspannung mit einer Frequenz oberhalb von 500 Hz zwischen Blech (2) und Elektrode erzeugt wird, sodass ein Wechselstrom erzeugt wird.

2. Verfahren nach Anspruch 1, **dadurch gekennzeichnet, dass** das Verfahren mit einer Anordnung durchgeführt wird, die eine Mehrzahl voneinander beabstandeter Erwärmungseinrichtungen (1) aufweist, wobei jede Erwärmungseinrichtung eine Elektrode (6) und einen Stromanschluss (23) an Elektrode aufweist, und wobei von der Mehrzahl Erwärmungseinrichtungen (1) eine oder mehrere zur Erzeugung eines Lichtbogens (38) angesteuert wird/werden.

3. Verfahren nach Anspruch 2, bei dem Lichtbögen in zeitlicher Abfolge an einer oder mehreren Erwärmungseinrichtungen insbesondere nacheinander erzeugt werden.

4. Verfahren nach einem der vorangehenden Ansprüche, **dadurch gekennzeichnet, dass** der Lichtbogen (38) über eine Zeitdauer von maximal 1 bis 5 Sekunden erzeugt wird.

5. Vorrichtung zum Richten von Blechen, aufweisend:
• eine Erwärmungseinrichtung (1) mit einer Elektrode (6) zur Erzeugung eines Lichtbogens (38) mit einem Stromfluss zwischen der Elektrode (6) und einer Oberfläche (3) eines Bleches (2), und einer Schutzgaszuführung (5; 36),
• einen Abstandhalter (7; 32) zur Einstellung eines vorgegebenen Abstandes zwischen der Elektrode (6) und der Oberfläche (3) des Bleches (2)
**dadurch gekennzeichnet, dass**
die Erwärmungseinrichtung zur Erzeugung eines elektrischen Lichtbogens (38) zwischen der Oberfläche (3) des Bleches (2) und der Elektrode (6) mittels einer hochfrequenten Wechselspannung mit einer Frequenz oberhalb von 500 Hz eingerichtet ist.

6. Vorrichtung nach Anspruch 5, aufweisend
eine Mehrzahl voneinander beabstandeter Erwärmungseinrichtungen (1), wobei jede der Mehrzahl Erwärmungseinrichtungen einzeln zur Erzeugung eines Lichtbogens (38) ansteuerbar ist, so dass Lichtbögen an beliebigen Elektroden in zeitlicher Abfolge erzeugt werden können.

7. Vorrichtung nach Anspruch 6, bei der die Erwärmungseinrichtungen (1) zueinander örtlich variabel positionierbar sind.

8. Vorrichtung nach einem der Ansprüche 6 oder 7, aufweisend ein oder mehrere Abschlusselemente (32), die beim Aufsetzen der Vorrichtung auf ein Blech (2) den zwischen den Elektroden (6) und dem Blech (2) gebildeten Zwischenraum (35) derart abdichten, dass ein Austreten von Schutzgas aus dem Zwischenraum behindert oder verhindert wird.

9. Vorrichtung nach einem der Ansprüche 5-8, wobei die Schutzgaszuführung in Form einer Düse ausgebildet ist, die die Elektrode (6) ringförmig umgibt, und mit der eine Schutzgasatmosphäre einstellbar ist, die bei Betrieb der Vorrichtung den Lichtbogen umgibt.

10. Vorrichtung nach einem der Ansprüche 5-9, wobei der Abstandhalter in Form mehrerer mit der Erwärmungseinrichtung verbundener Füße (7) ausgebildet ist, die bei Betrieb der Vorrichtung auf die Oberfläche (3) des Bleches (2) aufgesetzt sind.

11. Vorrichtung nach einem der Ansprüche 5-9,wobei der Abstandhalter in Form einer ringförmigen Ummantelung ausgebildet ist, welche die Elektrode umgibt und im Betrieb der Vorrichtung auf der Oberfläche des Bleches aufgesetzt ist, sodass ein Hohlraum gebildet ist, der durch die Schutzgaszuführung mit Schutzgas gefüllt ist.

12. Vorrichtung nach einem der Ansprüche 5 bis 11, **dadurch gekennzeichnet, dass** die Vorrichtung eine Steuerung (25) aufweist, die ausgestaltet ist, die Erwärmungseinrichtung(en) (1) so anzusteuern, dass der Lichtbogen das Material an der Oberfläche (3) des Bleches (2) nicht schmilzt.

13. Anordnung, aufweisend eine Vorrichtung nach einem der Ansprüche 5 bis 12 und ein Blech (2), wobei die Elektrode(n) (6) der Vorrichtung in Richtung einer Oberfläche (3) des Bleches orientiert ist/sind, um einen Lichtbogen (38) mit einem Stromfluss zwischen der/den Elektrode(n) und der Oberfläche des Bleches zu erzeugen.

14. Verwendung einer Vorrichtung nach einem der Ansprüche 5 bis 12 oder einer Anordnung nach Anspruch 13 zum Richten von Blechen.

## Claims

1. A method for straightening sheet metal, wherein an area of the sheet metal (2) is heated with a heating device (1), which has an electrode (6), wherein at the heating device (1) in a protective gas atmosphere (12) an arc (38) is generated with a current flow between the electrode (6) and a surface (3) of the sheet metal (2) without melting the material on the surface of the sheet metal,
**characterized in that**
the arc (38) is generated by applying a high-frequency alternating voltage with a frequency above 500 Hz between the sheet metal (2) and the electrode so that an alternating current is generated.

2. The method according to claim 1, **characterized in that** the method is implemented with an arrangement , which has a plurality of heating devices (1) being spaced apart from one another, wherein each heating device has an electrode (6) and a power connection (23) on the electrode, and wherein one or more of the plurality of heating devices (1) is/are actuated to generate an arc (38).

3. The method according to claim 2, wherein arcs are generated successively in particular as a sequence at one or more heating devices.

4. The method according to one of the preceding claims, **characterized in that** the arc (38) is generated for period of no more than 1 to 5 seconds.

5. A device for straightening sheet metal, consisting of:
• a heating device (1) having an electrode (6) for generating an arc (38) with a current flow between the electrode and a surface (3) of sheet metal (2), and a protective gas feed (5; 36),
• a spacer (7; 32) for adjusting a predetermined spacing between the electrode (6) and the surface (3) of the sheet metal (2)
**characterized in that**
the heating device is set up for generating an arc (38) between the surface (3) of sheet metal (2) and the electrode (6) by means of a high-frequency alternating current having a frequency above 500 Hz.

6. The device according to claim 5, consisting of:
a plurality of heating devices (1) being spaced apart from one another, wherein each of the plurality of heating devices can be actuated individually for generating an arc (38) such that arcs can be generated on any electrodes in chronological sequence.

7. The device according to claim 6, wherein the heating devices (1) are variably positionable in relation to one another.

8. The device according to one of the claims 6 or 7, having one or more terminating elements (32), which during lowering of the device onto a sheet metal (2) seal off the space (35) formed between the electrodes (6) and the sheet metal (2) in order to impede or prevent the protective gas from escaping the said space.

9. The device according to one of the claims 5 to 8, wherein the protective gas feed takes the form of a nozzle that encompasses the electrode (6) in circular form, and which can be used to adjust a protective gas atmosphere which encompasses the arc during operation of the device.

10. The device according to one of the claims 5 to 9, wherein the spacer is embodied in the form of a plurality of feet (7) connected with the heating device, whereby during operation of the device the feet are placed on the surface (3) of the sheet metal (2).

11. The device according to one of the claims 5 to 9, wherein the spacer has the form of a ringshaped cover, which encompasses the electrode and is placed on the surface of the sheet metal during the operation of the device in a way to form its hollow space which is filled with protective gas by the protective gas feed.

12. The device according to one of the claims 5 to 11, **characterized in that** the device has a control (25) that is designed to actuate the heating device(s) (1) in such a way that the arc does not melt the material on the surface (3) of the sheet metal (2).

13. An arrangement, comprising a device according to one of the claims 5 to 12 and a sheet metal (2), wherein the electrode(s) (6) of the device is/are oriented towards a surface (3) of the sheet metal in order to generate an arc (38) with a current flow between the electrode(s) and the surface of the sheet metal.

14. The use of a device according to one of the claims 5 to 12 or an arrangement according to claim 13 for straightening sheet metal.

## Revendications

1. Procédé pour redresser des tôles, dans le cadre duquel une zone d'une tôle (2) est chauffée à l'aide d'un système de chauffage (1), qui présente une électrode (6), sachant qu'un arc électrique (38) est produit à l'aide d'un courant entre l'électrode (6) et une surface (3) de la tôle (2) au niveau du système de chauffage (1) dans une atmosphère de gaz protecteur (12) sans faire fondre ce faisant le matériau au niveau de la surface de la tôle, **caractérisé en ce**
**que** l'arc électrique (38) est produit en appliquant une tension alternative à haute fréquence présentant une fréquence supérieure à 500 Hz entre la tôle (2) et l'électrode de manière à produire un courant alternatif.

2. Procédé selon la revendication 1, **caractérisé en ce que** le procédé est réalisé à l'aide d'un ensemble, qui présente une pluralité de systèmes de chauffage (1) espacés les uns des autres, sachant que chaque système de chauffage présente une électrode (6) et un branchement électrique (23) au niveau de l'électrode et sachant qu'un système de chauffage ou plusieurs systèmes de chauffage parmi la multitude de systèmes de chauffage (1) est/sont commandé(s) afin de produire un arc électrique (38).

3. Procédé selon la revendication 2, dans le cadre duquel des arcs électriques sont produits en particulier les uns après les autres selon un ordre chronologique au niveau d'un ou de plusieurs systèmes de chauffage.

4. Procédé selon l'une quelconque des revendications précédentes, **caractérisé en ce que** l'arc électrique (38) est produit sur une durée allant au maximum de 1 à 5 secondes.

5. Dispositif pour redresser des tôles, présentant :
- un système de chauffage (1) pourvu d'une électrode (6) servant à produire un arc électrique (38) à l'aide d'un courant entre l'électrode (6) et une surface (3) d'une tôle (2), et pourvu d'un dispositif d'alimentation en gaz protecteur (5 ; 36),
- un écarteur (7 ; 32) servant à ajuster une distance prédéfinie entre l'électrode (6) et la surface (3) de la tôle (2),
**caractérisé en ce**
**que** le système de chauffage est mis au point afin de produire un arc électrique (38) entre la surface (3) de la tôle (2) et l'électrode (6) au moyen d'une tension alternative à haute fréquence présentant une fréquence supérieure à 500 Hz.

6. Dispositif selon la revendication 5, présentant une multitude de systèmes de chauffage (1) espacés les uns des autres, sachant que chaque système de chauffage de la multitude de systèmes de chauffage peut être commandé individuellement afin de produire un arc électrique (38) de sorte que des arcs électriques peuvent être produits au niveau d'électrodes au choix selon un ordre chronologique.

7. Dispositif selon la revendication 6, dans le cadre duquel les systèmes de chauffage (1) peuvent être placés dans des positions variables localement.

8. Dispositif selon l'une quelconque des revendications 6 ou 7, présentant un ou plusieurs éléments de terminaison (32), qui assurent, lors de la pose du dispositif sur une tôle (2), l'étanchéité de l'espace intermédiaire (35) formé entre les électrodes (6) et la tôle (2) de telle manière à entraver ou éviter que le gaz protecteur ne s'échappe de l'espace intermédiaire.

9. Dispositif selon l'une quelconque des revendications 5 à 8, sachant que le système d'alimentation en gaz protecteur est réalisé sous la forme d'une buse, qui entoure de manière à présenter une forme annulaire l'électrode (6) et qui permet d'ajuster l'atmosphère de gaz protecteur, qui entoure l'arc électrique lors du fonctionnement du dispositif.

10. Dispositif selon l'une quelconque des revendications 5 à 9, sachant que l'écarteur est réalisé sous la forme de plusieurs pieds (7) reliés au système de chauffage, qui sont posés à la verticale sur la surface (3) de la tôle (2) lors du fonctionnement du dispositif.

11. Dispositif selon l'une quelconque des revendications 5 à 9, sachant que l'écarteur est réalisé sous la forme d'une gaine de forme annulaire, qui entoure l'électrode et qui est posée à la verticale sur la surface de la tôle lors du fonctionnement du dispositif de manière à former une cavité, qui est remplie par le système d'alimentation en gaz protecteur d'un gaz protecteur.

12. Dispositif selon l'une quelconque des revendications 5 à 11, **caractérisé en ce que** le dispositif présente une commande (25) qui est configurée pour commander le ou les systèmes de chauffage (1) de sorte que l'arc électrique ne fasse pas fondre le matériau au niveau de la surface (3) de la tôle (2).

13. Ensemble présentant un dispositif selon l'une quelconque des revendications 5 à 12 et une tôle (2), sachant que l'électrode ou les électrodes (6) du dispositif est/sont orientée(s) en direction d'une surface (3) de la tôle afin de produire un arc électrique (38) à l'aide d'un courant entre l'électrode ou les électrodes et la surface de la tôle.

14. Utilisation d'un dispositif selon l'une quelconque des revendications 5 à 12 ou d'un ensemble selon la revendication 13, pour redresser des tôles.
